# EUROPEAN PATENT SPECIFICATION

(11) **EP 2 286 276 B1**
(45) Date of publication and mention of the grant of the patent: **31.07.2019**
(21) Application number: 09822288.8
(22) Date of filing: 01.04.2009
(51) Int. Cl.: G01V 1/38

(54) **MARINE PASSIVE SEISMIC METHOD FOR DIRECT HYDROCARBON DETECTION**
PASSIVES SEISMISCHES UNTERWASSERVERFAHREN ZUR DIREKTEN KOHLENWASSERSTOFFERKENNUNG
PROCÉDÉ SISMIQUE PASSIF MARIN POUR LA DÉTECTION DIRECTE D'HYDROCARBURES

(30) Priority: 06.05.2008 US 151314
(43) Date of publication of application: 23.02.2011
(73) Proprietor: PGS Geophysical AS, 0216 Oslo (NO)
(72) Inventor: TENGHAMN, Stig, Rune, Lennart, Katy TX 77450 (US); BØRRESEN, Claes, Nicolai, Katy TX 77450 (US)
(74) Representative: Gill Jennings & Every LLP
(86) International application number: PCT/US2009/002045
(87) International publication number: WO 2010/047730

(56) References cited:
- US-A1- 2006 239 117
- US-A1- 2007 230 268
- US-A1- 2007 299 614
- US-A1- 2008 008 036
- US-B1- 6 598 001
- WAGNER D ET AL: "Joint inversion of active and passive seismic data in Central Java", GEOPHYSICAL JOURNAL INTERNATIONAL, BLACKWELL SCIENTIFIC PUBLICATIONS, OXFORD, GB, vol. 170, 1 January 2007 (2007-01-01), pages 923-932, XP002549332, ISSN: 0956-540X, DOI: 10.1111/J.1365-246X.2007.03435.X
- Holzner, R. et al.: "Applying microtremors analysis to identify hydrocarbon reservoirs", First Break, vol. 23 1 May 2005 (2005-05-01), pages 41-46, XP055376349, Retrieved from the Internet: URL:http://www.earthdoc.org/publication/do wnload/?publication=26560 [retrieved on 2017-05-29]

## Description

### Cross-reference to related applications

Not applicable.

### Statement regarding federally sponsored research or development

Not applicable.

### Background of the Invention

### Field of the Invention

The invention relates generally to the field of passive seismic methods for direct detection of hydrocarbon reservoirs. More specifically, the invention relates to methods for passive seismic detection of hydrocarbons performed in a body of water.

### Background Art

Passive seismic techniques known in the art are described, for example, in U.S. Patent Application Publication No. 2005/0060099 filed by Sorrells et al. Passive seismic techniques include placing one or more seismic sensors above a volume of the Earth's subsurface that is to be evaluated, and recording signals generated by the sensor(s) in response to natural seismic energy emanating from the subsurface. No controlled or active source is used. Other passive seismic methods and uses for such methods are described, for example, in: United States Patent No. 6,462,549 issued to Curtis et al.; United States Patent No. 5,377,104 issued to Sorrells et al.; United States Patent No. 6,389,361 issued to Geiser; United States Patent No. 6,947,843 issued to Fisher et al.; United States Patent No. 6,049,508 issued to Deflandre; United States Patent No. 5,996,726 issued to Sorrells et al.; United States Patent No. 5,148,110 issued to Helms; and U.S. Patent No. 5,774,419 issued to Uhl et al.

What is known in the art as "hydrocarbon microtremor analysis" is a passive seismic method that detects ambient energy propagating through the Earth for the direct detection of subsurface hydrocarbon bearing rock formations. Many apparently successful case studies from land surveys around the world indicate a unique physical phenomenon being involved in such analysis and detection. Background acoustic energy within the Earth of oceanic origin (in a frequency range of about 0.1 - 0.35 Hz) is polarized within or around a hydrocarbon-saturated subsurface rock formation into vertically-propagating energy with a frequency range of about 1 - 7 Hz. Such energy can be detected by sensitive, three-component particle motion sensors such as geophones placed at or near the Earth's surface. Geophones placed directly above a hydrocarbon-bearing reservoir have been known to successfully identify a frequency anomaly in the naturally occurring seismic energy in a range of about 2.0 -3.5 Hz. The foregoing spectral anomaly has not been observed anywhere other than above hydrocarbon bearing subsurface formations.

It is believed that resonances excited in the pore spaces of certain porous rock formations can only exist when the pore spaces include at least some hydrocarbon therein. Any ability to establish reservoir saturation (the fractional volume of the pore space actually occupied by hydrocarbon) or the thickness of such reservoirs using passive seismic techniques remain unsubstantiated. Methods known in the art at the time of the present invention fundamentally are a binary discriminator, in that they identify whether or not a hydrocarbon bearing rock formation is present in the subsurface at any particular geodetic location

Microtremors are continuous, low-amplitude ambient ground vibrations that propagate along the surface of the earth (unlike earthquakes, or other medium-to-high-amplitude transient seismic waves such as those associated with deliberately induced seismic sources used in controlled source seismic surveys). The spectral characteristics of microtremors can vary with time and geodetic location, but they may be considered essentially constant for short durations (on the order of a few minutes) and relatively small changes in geodetic position.

The mode of microtremor energy propagation (e.g. body waves as contrasted with surface waves) can also vary with geodetic location and with the frequency content of the energy, although it is believed that most microtremor energy propagates as surface waves. As a broad generalization, the origins of microtremors with frequencies less than 1 Hz are from natural phenomena such as wind noise, ocean wave action on coastlines and atmospheric variation, while microtremor energy greater than 1 Hz typically originates from man-made sources such as road traffic, trains, factory machines, etc.

Microtremor analysis methods known in the art use surface-wave dispersion to determine shear velocity of subsurface formations and layer thickness information for formations typically disposed at depths in the subsurface of less than about 100 meters. Analysis of spectral attributes of energy detected by three-component geophones is claimed to show characteristic spectral anomalies in the low-frequency range of 1 - 7 Hz for certain types of subsurface rock formations. Based on certain physical phenomena, background energy within the earth of oceanic origin (in the range of about 0.1 - 0.35 Hz) is transformed into vertically-propagating energy in a range of about 1 - 7 Hz. The most common attribute used to determine the existence of spectral anomalies is the ratio between the amplitude spectra (peak value) of the vertical and horizontal ground motion (V/H ratio), which weakly increases from a background range of about 1.0 to 1.2, to about 1.5 over hydrocarbon reservoirs. As such, the method is claimed to have the ubiquitous ability to reduce exploration risk, identify reservoir locations by fast-screening of relatively unexplored areas, to avoid dry wells, and to overcome surface or geological barriers to conventional controlled source seismic and electromagnetic survey methods. The foregoing techniques have been published in case examples and suggest a high success rate for more than 20 surveys conducted around the world since 2003 (almost all on land).

As explained above, the existence of a very low frequency (0.1 - 0.35 Hz), long wavelength ambient acoustic energy in the Earth has been established in scientific literature, and is generally attributed to oceanic wave activity along the coast of each land mass. Such long wavelength acoustic energy can propagate hundreds or thousands of kilometers within the Earth's crust. Three mechanisms believed to be related to the observed direct hydrocarbon indicators (DHIs) in the background noise of the Earth are proposed in Graf, R., Schmalholz, S.M., Podladchikov, Y., and Saenger, E.H., 2007, Passive low frequency spectral analysis: Exploring a new field in geophysics, World Oil 228, 47-52. Information published on the Internet, by Spectraseis AG, Giessereistrasse 5, 8005 Zurich, Switzerland at the URL http://www.spectraseis.com condensed this story to two primary candidates, resonant amplification and resonant scattering. Briefly, the two mechanisms may be described as follows.
1) Resonant amplification: An anomaly exists with a narrow frequency range, and the signal power is proportional to the hydrocarbon-bearing layer thickness of the reservoir. A peak is observed in the V/H ratio, that is, energy is polarized more into the vertical direction. Field data and modeling results suggest that microtremor signals originate from within the reservoir itself, which acts as a secondary source to the primary background source of the ambient noise field within the earth. There is also a theoretical argument that coupling between the reservoir rock and the pore fluid creates a characteristic resonance frequency within the pore space.
2) Resonant scattering: A less well-defined anomaly exists, but occurs on a macro-scale, where characteristic maxima are generated by reflections both between the reservoir and the surface and within the reservoir. The reflections result from complex impedance contrast due to the reservoir. Such scattering can be related to standing wave resonance. When seismic waves propagate from one medium to another medium with different complex impedances (e.g. a sharp change in the value of the quality factor), a part of the seismic waves is reflected. The phenomenon can possibly be explained by reflections generated when waves propagate from an elastic medium to a porous, elastic medium.

Spectraseis publications have loosely referred to "patchy saturation" models as part of the model for how the seismic anomaly is generated, but this 3D concept is only considered in the ID context in sponsored research by Quintal et al. See, Quintal, B., Schmalholz, S.M., Podladchikov, Y., and Carcione, J.M., 2007, Seismic low-frequency anomalies in multiple reflections from thinly-layered poroelastic reservoirs, SEG Abstracts, 1690-1694.

Frehner et al. (2007) describes that a non-wetting fluid entrapped in a pore can oscillate with a characteristic eigenfrequency (energy has been polarized into one dominant direction, and carries a characteristic peak frequency value in its amplitude spectrum). The elastic wave generated in the Earth by ocean waves initiates oscillations of the fluid drops in porous subsurface formations. The oscillatory energy of the pore fluid is transferred continuously to the rock matrix. As a result, seismic waves in the elastic rock carry a second frequency, the eigenfrequency of the pore fluid oscillations, on top of the applied external frequency. See, Frehner, M., Schmalholz, S.M., and Podladchikov, Y., 2007, Interaction of seismic background noise with oscillating pore fluids causes spectral modifications of passive seismic measurements at low frequencies, SEG Expanded Abstracts, 1307-1311.

Lambert et al. (2007) also use numerical simulations to suggest that the resonant amplification model is the mechanism behind observed changes in the spectral V/H ratio of ground motion. See, Lambert, M., Schmalholz, S.M., Saenger, E.H., and Podladchikov, Y., 2007, Low-frequency anomalies in spectral ratios of single station microtremor measurements: Observations across an oil and gas field in Austria, SEG Expanded Abstracts, 1352-1356.

Time reverse modeling of field data acquired by Spectraseis in Austria, backed by synthetic modeling and processing, suggests that passively-recorded microtremors over a reservoir can be used to isolate the reservoir body as a discrete energy source. This supports the inference that a fundamental acoustic phenomenon occurs within the reservoir. As noted above, Spectraseis interprets these modeling results as a supportive of the resonant amplification models. See, Steiner, B., Saenger, E.H., and Schmalholz, S.M., 2007, Time reverse modeling of microtremors: A potential method for hydrocarbon reservoir localization, SEG Expanded Abstracts, 2115-2119.

Quintal et al. (2007) instead address the resonant scattering model using numerical ID modeling. It is demonstrated in the Quintal et al. publication that poroelastic models must be used instead of elastic models when investigating the low-frequency attenuation and velocity scattering claimed by Spectraseis. The physical model proposed is wave-induced viscous (dissipative) fluid flow, generated by fluid pressure differences in heterogeneous, saturated poroelastic materials. Implicit in the discussion is the high values of attenuation associated with hydrocarbon-filled reservoirs, thus providing a discrimination foundation for the identification of oil vs. water. The choice of poroelastic parameterization and layer thickness (the reservoir is considered as a stack of thin layers) can change the computed impedance contrast of the reservoir against the background from 0.6% to 8%.

Irrespective of the particular mechanism by which the observed seismic anomaly is generated over hydrocarbon bearing reservoirs, tests of a DHI technique to date have all used stationary receivers, disposed on the land surface or on the bottom of a body of water. There exists a need to extend DHI techniques to be usable with towed marine acquisition systems.

US 2007/0299614 A1 describes a passive seismic data acquisition method for the detection of hydrocarbon reservoirs using earthquake seismometer equipment that may be positioned in a borehole.

### Summary of the Invention

A method according to one aspect of the invention is for detection of hydrocarbon bearing formations below the bottom of a body of water from seismic signals acquired by moving a plurality of spatially distributed seismic sensors in a body of water is defined by claim 1. Other aspects and advantages of the invention will be apparent from the following description and the appended claims.

### Brief Description of the Drawings

FIG. 1 shows an example of acquiring marine seismic data.
FIG. 2 shows a graph of typical frequency response of a high pass filter applied to streamer hydrophone signals.
FIG. 3 shows a graph of typical impulse response of the filter shown in FIG. 2.
FIG. 4 shows a graph of frequency domain response of signals recorded using a hydrophone streamer deployed in the water where no controlled source is present.
FIG. 5 shows a graph of the time domain response of the signals shown in FIG. 4.
FIG. 6 and FIG. 7 show graphs of, respectively, a hydrophone signal in the frequency domain and in the time domain where a filter function such as shown graphically in FIGS. 2 and 3 is not used.
FIGS. 8A through 8H show graphs of spectral analysis of passive seismic data recorded at a number of different stations.
FIG. 9A shows a graph of peak amplitude in a frequency range of 1 to 6 Hz for the station data shown in FIGS. 8A through 8H.
FIG. 9B shows a seismic record section corresponding positionally to the graphs of FIG. 9A.
FIG. 10 shows a graph of spectral analysis of passive seismic data recorded over both a hydrocarbon reservoir and over a non-hydrocarbon bearing formation.
FIG. 11 shows graphs of spectral analysis of passive seismic data as recording time is increased.

### Detailed Description

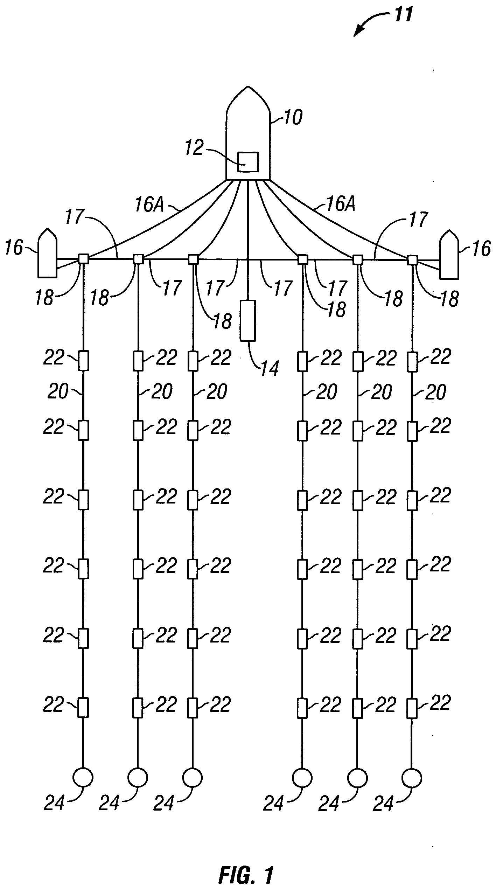

An example marine seismic data acquisition system that can be used in various examples of a method according to the invention is shown schematically in FIG. 1. The system shown in FIG. 1 may be of any type known in the art for conventional marine controlled source or active source seismic data acquisition and can include a seismic survey vessel 10 that is movable along the surface of a body of water 11 such as a lake or the ocean. The survey vessel 10 may include thereon a recording system, shown generally at 12. The recording system 12 may include devices (none shown separately) for determining geodetic position of the vessel 10 and each of a plurality of seismic sensors 22 at any time, devices for actuating a seismic energy source 14 at selected times, and a data recorder for recording signals generated by each of the seismic sensors 22.

The seismic sensors 22 are typically disposed at selected longitudinal positions along each of a plurality of streamer cables 20 or "streamers." The streamers 20 are towed by the survey vessel 10, and are maintained in relative lateral position with respect to each other and with respect to the vessel center line by certain towing devices. Such towing devices may include paravanes 16 coupled to the vessel 10 by "superwide" ropes 16A, lead in cables terminated at the forward end of each streamer 20 by a lead in coupling 18, and spreader cables 17 to maintain the relative lateral position of the streamers 20. Motion stability of the streamers 20 in the water 11 and acquisition of certain types of data, e.g., geodetic position, may be performed by certain equipment in a tail buoy 24 affixed to the distal end of each streamer 20. The precise configuration of the acquisition system, for example, the number of and length of the streamers 20, the types and numbers of sensors, and the towing equipment configuration described herein is only one example, and is not intended to limit the scope of the present invention. The seismic sensors 22 may be pressure or pressure gradient responsive sensors such as hydrophones. The sensors 22 may also include both pressure responsive sensors and particle motion responsive sensors such as geophones or accelerometers. One example of a streamer including a combination of both pressure responsive sensors and motion responsive sensors is described in U.S. Patent No. 7,239,577 issued to Tenghamn et al. and assigned to the assignee of the present invention.

The system shown in FIG. 1 in some examples may include a seismic energy source 14 as explained above. It is contemplated that during acquisition of seismic signals according to the invention, the seismic energy source 14 may be used as it would ordinarily be used in the acquisition of seismic data resulting from a controlled or active seismic energy source, and data recordings (explained below) may include both active source seismic information as well as passive seismic information. It is believed that the signals to be detected for direct hydrocarbon indication ("DHI") according to the invention generally have frequencies below about 8 to 10 Hz. Typical seismic energy sources such as air guns or arrays of air guns do not have substantial energy output below about 6Hz, or can be readily configured to exclude such energy content. Therefore, conventional, "active source" seismic data may be acquired substantially contemporaneously with acquisition of passive seismic data according to the invention. In other examples, the seismic source 14 may be omitted from the system, or may be left inactive during acquisition of passive seismic signals.

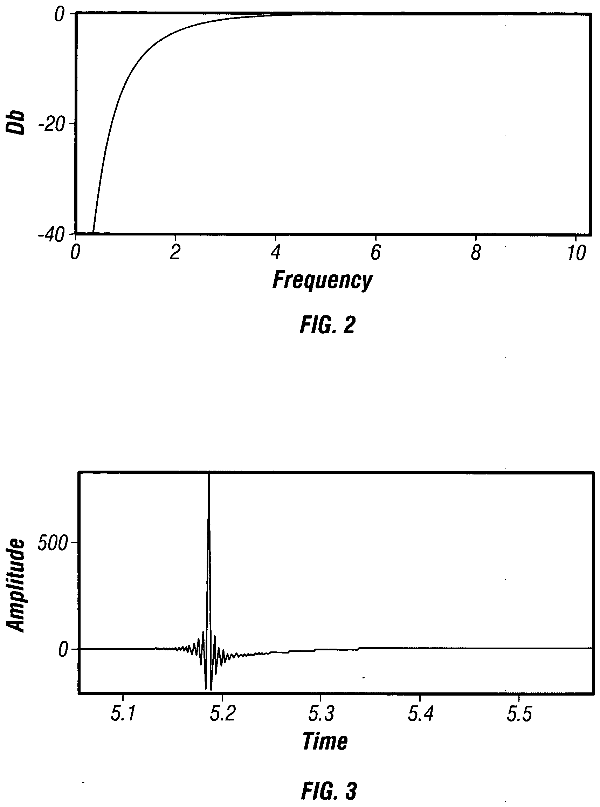

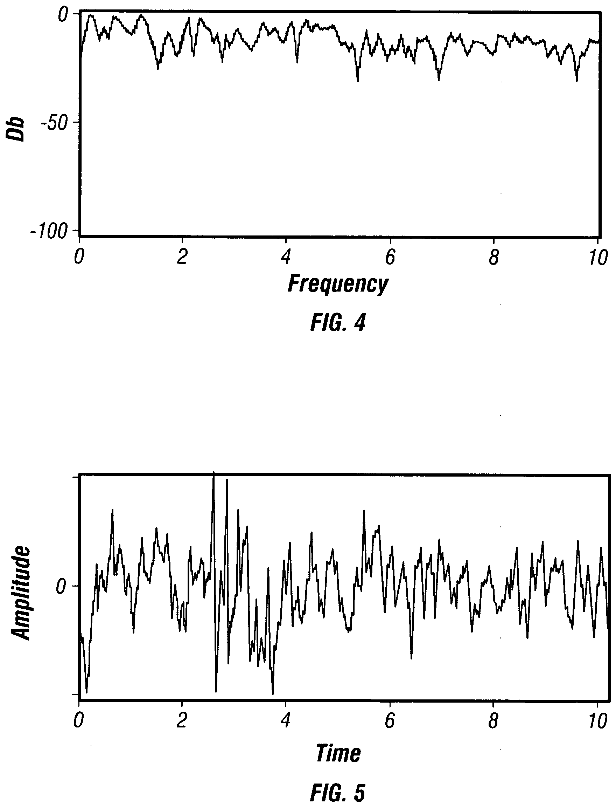

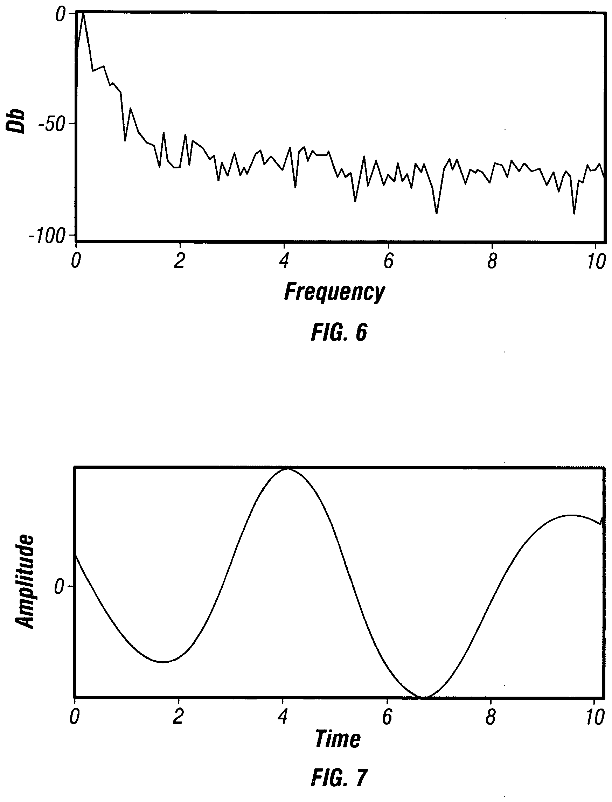

As explained above in the Background section herein, it is believed that background acoustic energy exists within the Earth, is of oceanic origin and is within a frequency range of about 0.1 to 0.35 Hz. In marine seismic acquisition systems such as shown in FIG. 1, such background acoustic energy may be detected by operating the seismic sensors 22 so that the detected signals respond to seismic energy in a frequency range extending down to approximately zero (DC). The lowest frequency detected will depend on the particular type of sensor used, however the seismic sensors should be selected to be able to detected energy at least below 0.1 Hz. Operating the seismic sensors to provide the above described signal response may include omitting high pass filters ordinarily applied to the signals generated by seismic sensors in a marine streamer. FIG. 2 shows the typical frequency response and FIG. 3 shows the typical impulse response of such filters as applied to hydrophone streamer signals. As will be readily appreciated by those skilled in the art, such filters effectively remove most signal energy below about 2 Hz. FIG. 4 shows the frequency domain response, and FIG. 5 shows the time domain response of signals recorded using a hydrophone streamer deployed in the water where no controlled source is present. FIG. 6 and FIG. 7 show, respectively, the hydrophone signal in the frequency domain and in the time domain where the filter function shown graphically in FIGS. 2 and 3 is not used. What may be readily observed in FIGS. 4 and 5 is a large amplitude signal at about 0.2 Hz which corresponds to the background acoustic energy in the water.

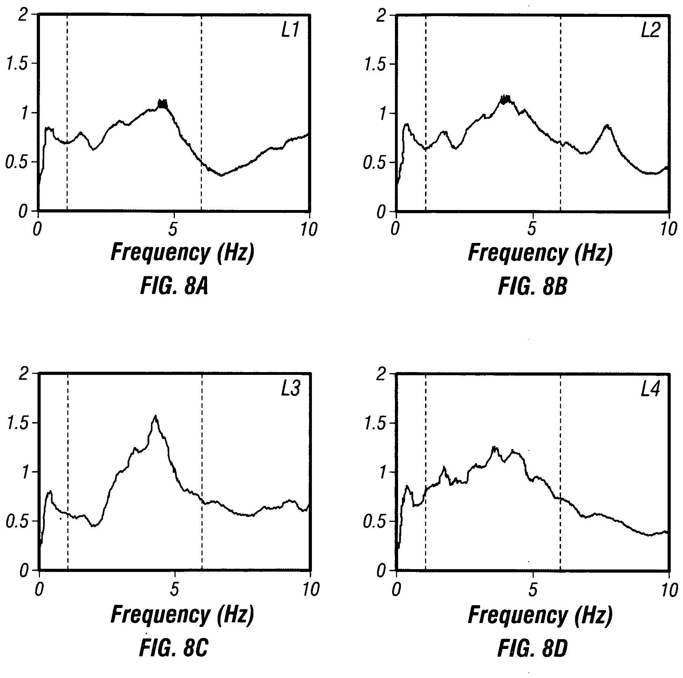

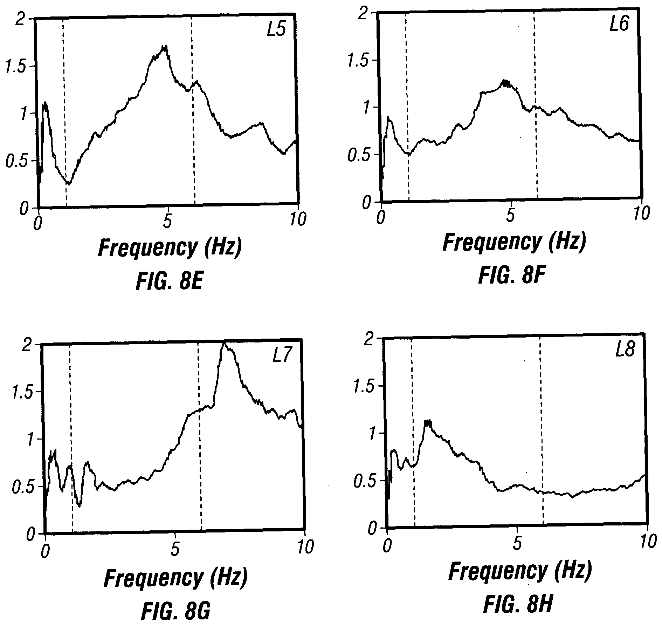

The above described background acoustic energy, generally in the frequency range of 0.1 to 0. 35 Hz, is believed to be polarized into vertically-propagating acoustic energy in a frequency range of about 1 to 7 Hz within hydrocarbon bearing subsurface rock formations. For land-based seismic surveys or for water bottom based seismic surveys, where three-component particle motion sensors can be used, the most common attribute determined from passive seismic energy measurements is the ratio between the amplitude spectra (peak value) of the vertical and horizontal ground (or water bottom) motion ("V/H ratio"), which may increase from a background value of about 1.0 to 1.2, to about 1.5 above hydrocarbon bearing rock formations. Such response is shown in the graphs of FIG. 8. FIGS. 8A through 8H show the V/H spectrum in a range of 0 to 10 Hz for a seismic sensor disposed at each of a plurality of different geodetic positions, each such position designated by L1 through L8, respectively.

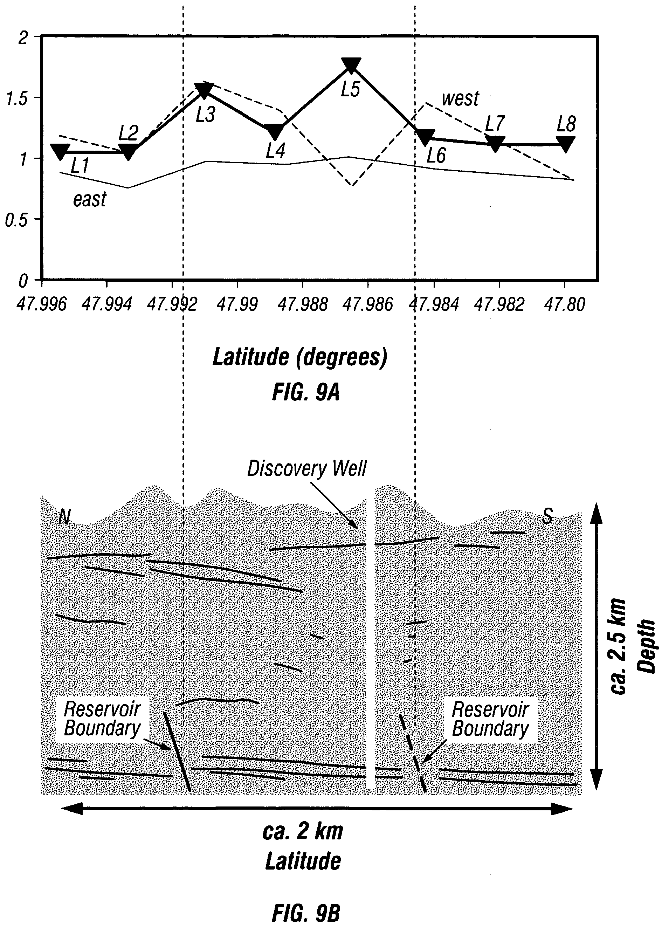

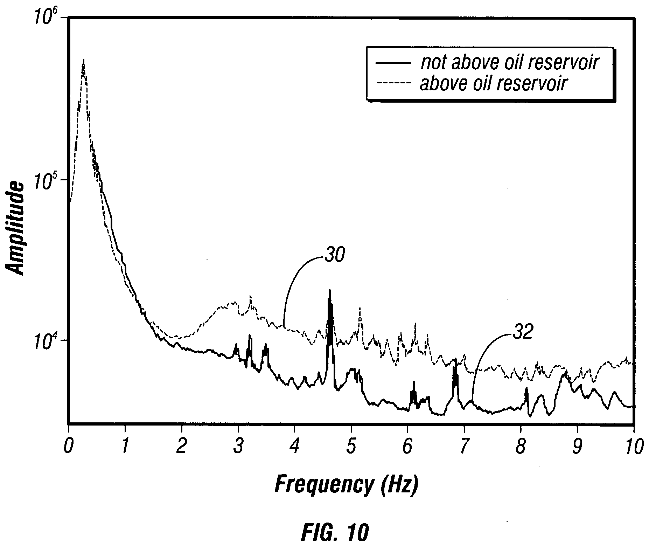

FIG. 9A shows the peak V/H amplitude from signals detected by the same seismic sensor explained with reference to FIGS. 8A through 8H, wherein the geodetic positions of the sensor, L1 through L8, are shown. A seismic data record section referenced to the position of a hydrocarbon reservoir discovery well drilled through the reservoir is shown correspondingly in FIG. 9B. The graph FIG. 9A shows a V/H ratio peak at position L5 as indicative of the presence of the reservoir below. It will be readily appreciated by those skilled in the art that three-component particle motion measurement is not practicable when using towed streamer sensors in a body of water, because the water does not transmit shear acoustic waves to any appreciable degree. Therefore, in a method according to the invention, the spectral content of passive seismic signals is analyzed directly for the presence of high amplitude anomalies, preferably within a frequency range of about 2 to 6 Hz. An example of spectral content of passive seismic signals recorded above a hydrocarbon bearing reservoir is shown at curve 30 in the graph of FIG. 10. Curve 32 in FIG. 10 shows spectral content of passive seismic signals recorded other than above a hydrocarbon bearing reservoir.

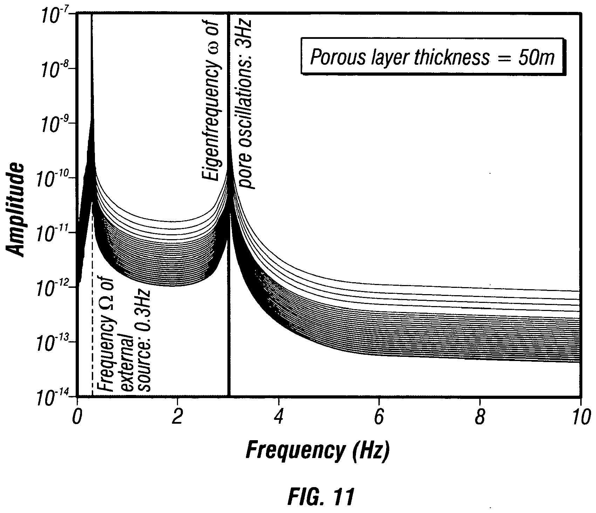

FIG. 11 shows graphs of a simulation of response of passive seismic sensing for various layer thicknesses of a hydrocarbon bearing formation. It is believed that the peak amplitude of the seismic energy in the 2 to 6 Hz range will be related to the thickness of a subsurface hydrocarbon bearing reservoir.

Referring once again to FIG. 1, to acquire signals for direct hydrocarbon detection using a marine seismic data acquisition system, the following procedures may be used. First, the system may be moved through the water 11, in some examples at speeds used for conventional (active source) seismic data acquisition, that is, on the order of 4 to 5 knots (about 6 to 8 km/hr). If the sensors 22 include both pressure responsive devices and motion responsive devices, the streamers 20 may be towed at greater depth in the water 11, for example, 15 meters as contrasted with about 7 meters for streamers including only pressure responsive devices as the sensors 22. Operating the streamers 20 at such greater depth may reduce signal attenuation due to acoustic energy reflection from the water surface. In addition, the signals from the motion responsive sensing devices and the pressure responsive sensing devices may be combined to increase signal to noise ratio of the detected seismic energy.

In conventional seismic acquisition, analog or other forms of signal filtering are applied to the signals generated by the seismic sensors 22 to exclude sensor response below a predetermined lower frequency, as explained above with reference to FIGS. 2 and 3. In the invention, such high pass filtering should be omitted, and all signals down to the lowest response frequency of the sensors 22, which may be proximate zero frequency depending on the sensor type, may be recorded. The signals detected by a plurality of the sensors 22 should be summed or stacked, in both the longitudinal and transverse directions with respect to motion of the vessel 10 and the streamers 20. Such summing may be performed within the streamers 20 by analog signal interconnection, or, preferably, may be performed within the recording system 12 (or in another data processing device after recording). The summing or stacking may be performed using, for example, all sensors disposed within a predetermined aperture. In some examples, the aperture may have a radius of about ½ to 2 times the shortest wavelength to be detected for passive seismic analysis. Such radius for water having acoustic velocity of about 1600 meters/second would be about 160 meters for 10 Hz seismic energy. Thus, for the system shown in FIG. 1, signals from sensors within apertures of as much as 320 meters may be stacked. Signals detected by the sensors 22 may be recorded for time intervals substantially the same as those used for detection of conventional seismic signals, e.g., about 10 seconds. In some examples, data recording of passive seismic signals may be performed substantially contemporaneously with data recording used for conventional seismic surveying. Data records made in the foregoing manner may therefore include both "active source" seismic signals and passive seismic signals.

If the sensors 22 include pressure responsive and motion responsive devices, such as described in the Tenghamn et al. '577 patent referred to above, some factors may be considered in data acquisition and processing according to the invention that are different from those relevant to active source seismic acquisition. When "dual sensor" streamers, such as disclosed in the Tenghamn et al. '577 patent, are used in active source seismic acquisition, typical acquisition and processing includes filtering the particle motion sensor signals at lower frequencies (for example, below about 20 Hz) because of substantial noise at such lower frequencies. In performing passive seismic recording as explained above, the seismic signals are evaluated typically at frequencies of 6 Hz and below for amplitude variation in such frequency range. The signals from the motion sensors can then be filtered, for example, to exclude all signal components that do not propagate in a vertical direction (i.e. from the subsurface reservoir), to reduce the noise. Further, in a typical 3D acquisition system, the area covered by the data acquisition system is large enough so as to avoid spatial aliasing, which will make additional filtering methods (e.g., *f* - *k* filtering) usable. By using additional filtering of the particle motion signals, the noise in the particle motion sensor signal is substantially attenuated.

In the event there is excessive noise in the particle motion sensor signals in particular implementations of the invention, the invention may be performed using only signals from the pressure responsive sensors. It may then be advantageous to tow the streamers at greater depth below the water surface to provide lower attenuation as a result of signal reflection from the water surface (the surface "ghost").

After recording and stacking as explained above, the stacked signals may be processed to further attenuate noise resulting from acoustic energy traveling across the water. Such processing may include, for example, frequency-wavenumber (*f - k*) filtering. The signals may then be transformed into the frequency domain, for example, using a discrete or fast Fourier transform. Signal amplitude in the range of about 0 to 10 Hz may be determined for the processed signals. Where signal amplitude in, for example, the frequency range of about 2 to 6 Hz exceeds a selected threshold, it may be inferred that the geodetic position of the sensors corresponding to such indication is above a hydrocarbon bearing subsurface formation.

The invention may provide a method for direct detection of subsurface hydrocarbon bearing formations using conventional marine seismic survey systems. The invention may be performed contemporaneously with acquisition of conventional marine seismic signals, at essentially no additional cost.

While the invention has been described with respect to a limited number of embodiments, those skilled in the art, having benefit of this disclosure, will appreciate that other embodiments can be devised which do not depart from the scope of the invention as disclosed in the attached claims. Accordingly, the scope of the invention should be limited only by the attached claims.

## Claims

1. A method for detection of hydrocarbon bearing formations below the bottom of a body of water (11) from seismic signals acquired by moving a plurality of spatially distributed seismic sensors (22) in a body of water, the signals including response to any seismic energy having frequencies of as low as 0.1 Hz and below, the method comprising:
stacking the acquired seismic signals from the plurality of the sensors (22) in both longitudinal as well as in transverse directions with respect to motion of the sensors in the body of water; and
analyzing the stacked signals in both longitudinal as well as in transverse directions with respect to the motion of the sensors in the body of water for presence of passive seismic energy indicative of hydrocarbon bearing formations below the bottom of the body of water.

2. The method of claim 1 wherein the seismic sensors (22) comprise pressure responsive sensors.

3. The method of claim 1 wherein the seismic sensors (22) comprise particle motion responsive sensors and pressure responsive sensors.

4. The method of claim 1 wherein the seismic signals further comprise energy resulting from actuating a seismic energy source (14) in the water (11) substantially contemporaneously with the detecting the seismic energy down to the frequency proximate zero.

5. The method of claim 1 wherein the stacking is performed within a predetermined aperture of one half to two times a shortest wavelength of passive seismic energy from formations below the bottom of the body of water (11).

6. The method of claim 1 wherein the analyzing comprises determining existence of seismic energy in a frequency range of about 2 to 6 Hz above a selected amplitude threshold.

## Patentansprüche

1. Verfahren zur Erkennung von kohlenwasserstoffhaltigen Formationen unter dem Boden eines Gewässers (11) aus seismigen Signalen, die durch Bewegen einer Vielzahl von im Raum verteilten seismischen Sensoren (22) in einem Gewässer erfasst werden, wobei die Signale eine Reaktion auf seismische Energie mit niedrigen Frequenzen von 0,1 Hz und weniger enthalten, wobei das Verfahren umfasst:
das Stapeln der erfassten seismischen Signale von der Vielzahl von Sensoren (22) sowohl in der Längsrichtung als auch in der Querrichtung bezüglich der Bewegung der Sensoren im Gewässer, und
die Analyse der gestapelten Signale sowohl in der Längsrichtung als auch in der Querrichtung bezüglich der Bewegung der Sensoren im Gewässer auf die Anwesenheit von passiver seismischer Energie, die kohlenwasserstoffhaltige Formationen unter dem Boden des Gewässers andeutet.

2. Verfahren nach Anspruch 1, wobei die seismischen Sensoren (22) auf Druck ansprechende Sensoren umfassen.

3. Verfahren nach Anspruch 1, wobei die seismischen Sensoren (22) auf Partikelbewegung ansprechende und auf Druck ansprechende Sensoren umfassen.

4. Verfahren nach Anspruch 1, wobei die seismischen Signale weiter Energie umfassen, die aus der Betätigung einer seismischen Energiequelle (14) im Wasser (11) entsteht, im Wesentlichen gleichzeitig mit der Erfassung der seismischen Energie bis herunter zur Frequenz von ungefähr null.

5. Verfahren nach Anspruch 1, wobei das Stapeln innerhalb einer vorgegebenen Apertur von einer Hälfte bis zum Doppelten der kürzesten Wellenlänge der passiven seismischen Energie aus Formationen unter dem Boden des Gewässres (11) erfolgt.

6. Verfahren nach Anspruch 1, wobei die Analyse die Ermittlung von seismischer Energie in einem Frequenzbereich von ca. 2 bis 6 Hz über einer ausgewählten Amplitudenschwelle umfasst.

## Revendications

1. Procédé servant à détecter des formations renfermant des hydrocarbures sous le fond d'une étendue d'eau (11) à partir de signaux sismiques acquis par le déplacement d'une pluralité de capteurs sismiques spatialement répartis (22) dans une étendue d'eau, les signaux comprenant une réaction à toute énergie sismique quelconque ayant des fréquences pouvant descendre jusqu'à 0,1 Hz et moins, le procédé comportant les étapes consistant à :
superposer les signaux sismiques acquis à partir de la pluralité de capteurs (22) à la fois dans les directions longitudinale ainsi que transversale par rapport au mouvement des capteurs dans l'étendue d'eau ; et
analyser les signaux superposés à la fois dans les directions longitudinale ainsi que transversale par rapport au mouvement des capteurs dans l'étendue d'eau à la recherche de présence d'énergie sismique passive qui indique des formations renfermant des hydrocarbures sous le fond de l'étendue d'eau.

2. Procédé selon la revendication 1, dans lequel les capteurs sismiques (22) comportent des capteurs sensibles à la pression.

3. Procédé selon la revendication 1, dans lequel les capteurs sismiques (22) comportent des capteurs sensibles au mouvement des particules et des capteurs sensibles à la pression.

4. Procédé selon la revendication 1, dans lequel les signaux sismiques comportent par ailleurs de l'énergie résultant de l'actionnement d'une source d'énergie sismique (14) dans l'eau (11) de manière sensiblement contemporaine à la détection de l'énergie sismique pouvant descendre jusqu'à la fréquence proche de zéro.

5. Procédé selon la revendication 1, dans lequel l'étape consistant à superposer est effectuée dans les limites d'une ouverture prédéterminée d'une demie à deux fois une longueur d'onde la plus courte d'énergie sismique passive en provenance des formations sous le fond de l'étendue d'eau (11).

6. Procédé selon la revendication 1, dans lequel l'étape consistant à analyser comporte l'étape consistant à déterminer l'existence d'énergie sismique dans une bande de fréquences allant d'environ 2 à 6 Hz au-dessus d'un seuil d'amplitude sélectionné.
